# EUROPEAN PATENT SPECIFICATION

(11) **EP 1 368 222 B1**
(45) Date of publication and mention of the grant of the patent: **03.09.2008**
(21) Application number: 02703727.4
(22) Date of filing: 05.03.2002
(51) Int. Cl.: B62D 53/08, B62D 53/06

(54) **ARTICULATED VEHICLE**
GELENKFAHRZEUG
VEHICULE ARTICULE

(30) Priority: 15.03.2001 GB 0106326
(43) Date of publication of application: 10.12.2003
(73) Proprietor: Henderson, Stephen Carl, Richmond, North Yorkshire DL10 5EG (GB)
(72) Inventor: Henderson, Stephen Carl, Richmond, North Yorkshire DL10 5EG (GB)
(74) Representative: Finnie, Peter John
(86) International application number: PCT/GB2002/000930
(87) International publication number: WO 2002/074610

(56) References cited:
- WO-A-84/00936
- DE-A- 3 319 931
- DE-B- 1 022 476
- DE-B- 1 195 610
- FR-A- 2 475 488
- US-A- 4 586 578

## Description

The present invention comprises an articulated vehicle which has improved road stability characteristics and which moderates wheel loads as compared with many prior such vehicles.

Articulated vehicles are designed for many different purposes but a main consideration is usually that of making it possible to interchange the towed trailer section of the vehicle by disengaging it from the powered towing tractor unit. In such vehicles, while the tractor unit is comparatively stable when negotiating' bends or corners in the roadway, the required mechanical flexibility in the interlinking of tractor unit and trailer section and the position of the imposed load are potential sources of instability of the combination of tractor unit and trailer section in such circumstances.

By way of example, the so-called "fifth wheel" on a tractor unit may be deliberately designed to allow relative pivoting of tractor unit and trailer about an axis transverse to the chassis, thereby allowing the tractor unit to pitch freely but also resisting transverse roll of the trailer. When the tractor unit and trailer are aligned, this roll resistance is transferred to the trailer and works to keep the vehicle overall in an upright position. However when the tractor unit enters a bend, the orientation of the fifth wheel axis relative to the main chassis of the trailer is progressively changed and its ability to resist roll of the chassis is progressively diminished, reaching zero when the tractor unit and main chassis are at right angles.

DE 1195610 B proposes an articulated vehicle comprising a multi-axle bogie pivotally connected of pivotally connectable to a trailer chassis so that, when connected, the bogie and trailer chassis can articulate around a generally vertical axis point, wherein the position of said pivotal connection is displaced relative to the vertical neutral axis of the bogie by an offset.

It is an object of the present invention to provide an improved form of articulated vehicle having improved road stability characteristics and which moderates wheel loads as compared with many prior such vehicles.

The articulated vehicle according to the present invention comprises a multi-axle bogie pivotally connected or pivotally connectable to a trailer chassis so that, when connected, the bogie and trailer chassis can articulate around a generally vertical pivot axis, wherein the position of said pivotal connection is displaced relative to the vertical neutral axis of the bogie by an offset, wherein the pivotal connection is a turntable able to transmit pitch and roll moments which with the offset causes a net pitch moment to be induced at the position of pivotal connection which resists roll of the vehicle as the bogie articulates relative to the trailer chassis.

The present invention may be applied to any form of articulated vehicle, including for example buses mounted upon one or more driven bogies. However it is of particular merit and advantage when it is a feature of load-carrying vehicles supported upon bogies. It will therefore be described as applied to such load-canying vehicles but it should be borne in mind that it is of merit also as applied to buses and other said vehicles.

The invention is applicable to pivotal bogies at the forward end of a vehicle, in which case the bogie will usually be a powered bogie, or at the rear of a vehicle, in which case the bogie may or may not be powered, or to both a forward and rearward bogie. In any of these cases, it is particularly preferred that the bogie be of a type which allows it to be demounted from the main chassis of the vehicle.

The bogie units to which the present invention is applicable have two or more axles and indeed two bogie units on a single vehicle to which the present invention is applied may have two different numbers of axles. Any or each of the bogie units upon which the vehicle overall is mounted may advantageously be removably attached to the vehicle, both with the object of permitting ready maintenance of the individual bogie units and also to allow bogies to be specifically selected and installed with the specific requirements of individual differing loads in mind.

The specific point at which the bogie unit is pivotally connected to the trailer chassis may be a fixed point or provision may be made to allow the point of pivotal mounting of the unit upon the chassis to be moved along, across or vertically relative to the bogie unit, or even tilted, in order to change the roll restoring moment of the unit. The position of the pivot point may be variable while the vehicle is moving or may be restricted to taking place only while the vehicle is stationary.

As indicated above, the pivotal bogie unit may be releasably connectable to the main trailer chassis. By way of example, a turntable may be mounted directly upon the bogie chassis and that turntable is adapted to be locked upon the underside of the trailer chassis, for example it may be provided with a locking mechanism to receive a kingpin or other similar feature mounted upon the underside of the main trailer chassis. A frame may extend along the upper surface of the turntable and may be shaped to receive and secure the trailer chassis in both pitch and roll movements. Cabling and service hoses may be connectable to the main chassis by means of couplings on the frame, which hoses may enter the bogie at the turntable.

With the turntable able to transmit pitch and roll moments, the wheel loads may be actively or passively controlled in order, among other features, to vary the restoring moment. This is of particular merit in relation to vehicle speed and the contours and condition of the terrain.

In one embodiment of this form of the invention, the support frame at the upper surface of the turntable may be extended forwards to support the vehicle driver's cab. When the bogie is not engaged with a trailer chassis, the turntable may be locked, so securing together the cab and the bogie unit, and the vehicle may then be used like a conventional tractor unit with a fifth wheel coupling. However, when the bogie is subsequently to be connected to a load-bearing trailer chassis, reversal of the bogie may engage a kingpin into an associated clamping mechanism so that the bogie becomes pivotally connected to the trailer while the driver's cab unit becomes engaged with the trailer.

As indicated above, the rear end of the main chassis may be supported upon one or more fixed axles or may be mounted upon another pivotal bogie. In a preferred form of the present invention, both ends of the vehicle are mounted upon pivotal bogies. Preferably both of those bogies are de-mountable, to allow them to be changed to allow for different loads and also to allow them more readily to be maintained and serviced.

The present invention will now be further described and illustrated, by way of example, with reference to the accompanying drawings, which illustrate one preferred form of the present invention and wherein:-
Fig. 1 is a simplified plan view of an articulated vehicle according to the invention; and
Fig. 2 is a corresponding elevational view of the vehicle of Fig. 1.

The illustrated vehicle comprises a driven bogie 10 at its forward end and an undriven bogie 11 at its rearward end, which two bogies between them support a main, load-carrying chassis 12. The front bogie has a "fifth wheel" of conventional type 13, by means of which the load borne by the bogie is applied down the neutral axis 22 of the bogie.

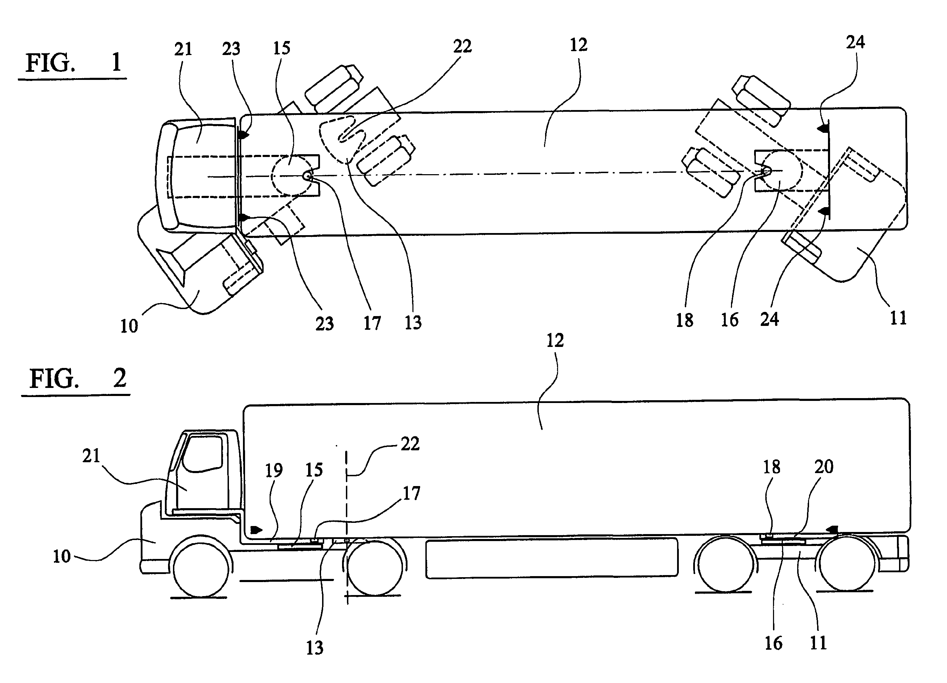

The main chassis 12 engages the bogies 10 and 11, via turntables 15 and 16 respectively, at positions on the bogies displaced forwardly and rearwardly respectively from the respective neutral axes. Because these turntables are located at a distance from the actual or notional fifth wheel position in each case, a net moment is induced at the articulation points of the vehicle at the points of pivoting of these turntables. These bogie pitch moments assist greatly in resisting roll of the vehicle as these bogies articulate relative to the chassis 12. As seen clearly in Fig. 1 of the drawings, the two bogies 10 and 11 are able to swing relative to the chassis 12 to positions where they are each more centrally pivoted below the main chassis than pivoting at the neutral axis would allow.

Each of the turntables 15 and 16 may be provided with a locking mechanism by means of which they are releasably secured to the main chassis. In the illustrated vehicle, this mechanism is based upon the use of a kingpin, 17 or 18, extending downwardly from the chassis 12 and engaging a slot in a support frame 19 or 20 respectively. The position of each of the bogies 10 and 11 relative to the chassis 12 is further secured by pins 23 and 24 extending from each bogie into holes in the chassis.

In the illustrated vehicle, the forward support frame 19 is extended under the driver's cab 21. This then allows this cab to remain aligned with the body of the vehicle while the driven forward bogie 10 articulates with the main chassis. However provision may be made for the cab 21 to be secured directly to the bogie 10, when the latter is in use disengaged from any main chassis such as the chassis 12.

## Claims

1. An articulated vehicle comprising a multi-axle bogie (10) pivotally connected or pivotally connectable to a trailer chassis (12) so that, when connected, the bogie and trailer chassis can articulate around a generally vertical pivot axis, wherein the position of said pivotal connection is displaced relative to the vertical neutral axis (22) of the bogie (10) by an offset, wherein the pivotal connection is a turntable (15) able to transmit pitch and roll moments which with the offset causes a net pitch moment to be induced at the position of pivotal connection which resists roll of the vehicle as the bogie (10) articulates relative to the trailer chassis (12).

2. An articulated vehicle as claimed in claim 1, wherein said vehicle is a load-carrying vehicle.

3. An articulated vehicle as claimed in either of the preceding claims, wherein said bogie (10) is located at the forward end of the vehicle or at the rearward end of the vehicle or wherein one said bogie is located at each of the forward and the rearward ends of the vehicle.

4. An articulated vehicle as claimed in any of the preceding claims, wherein said bogie (10) is able to be demounted from the trailer chassis (12).

5. An articulated vehicle as claimed in claim 4, wherein the turntable (15) is mounted directly upon a chassis of the bogie (10) and said turntable is adapted to be locked upon the underside of the trailer chassis (12).

6. An articulated vehicle as claimed in claim 5, wherein a support frame (19) at the upper surface of said turntable (15) is extended forwards to support a driver's cab (21) of the vehicle.

7. An articulated vehicle as claimed in claim 6, wherein said support frame (19) is releasably connected to said turntable (15) and to said trailer (12) alternatively.

8. An articulated vehicle as claimed in any of the preceding claims, wherein said vehicle has two said bogies, having different numbers of axles.

9. An articulated vehicle as claimed in any of the preceding claims, wherein the pivotal connection about which the bogie (10) is pivotally connected or pivotally connectable to the trailer chassis (12) is fixed.

10. An articulated vehicle as claimed in any of claims 1 to 8, wherein the pivotal connection about which the bogie (10) is pivotally connected or pivotally connectable to the trailer chassis (12) is movable relative to the bogie.

11. An articulated vehicle as claimed in any of the preceding claims, wherein the bogie (10) includes a fifth wheel (13) at the position of the neutral axis (22).

## Patentansprüche

1. Gelenkfahrzeug mit einem mehrachsigen Drehgestell (10), das an einem Anhängerfahrgestell (12) schwenkbar verbunden oder schwenkbar verbindbar ist, derart dass, wenn verbunden, das Drehgestell und das Anhängerfahrgestell um eine im Allgemeinen vertikale Schwenkachse schwenken können, wobei die Positionen der Schwenkverbindung relativ zu der senkrechten neutralen Achse (22) des Drehgestells (10) um einen Versatz verschoben ist,
wobei die Schwenkverbindung ein Lenkkranz (15) ist, der geeignet ist, Nick- und Rollmomente zu übertragen, was mit dem Versatz dazu führt, dass ein Netto-Nickmoment an der Position der Schwenkverbindung hervorgerufen wird, welches sich dem Rollen des Fahrzeugs widersetzt, wenn das Drehgestell (10) relativ zu dem Anhängerfahrgestell (12) schwenkt.

2. Gelenkfahrzeug nach Anspruch 1, wobei das Fahrzeug ein Lastkraftwagen ist.

3. Gelenkfahrzeug nach einem der vorhergehenden Ansprüche, wobei das Drehgestell (10) an dem vorderen Ende des Fahrzeugs oder an dem hinteren Ende des Fahrzeugs angeordnet ist, oder wobei das Drehgestell an jedem der vorderen und hinteren Enden des Fahrzeugs angeordnet ist.

4. Gelenkfahrzeug nach einem der vorhergehenden Ansprüche, wobei das Drehgestell (10) geeignet ist, von dem Anhängerfahrgestell (12) abgenommen zu werden.

5. Gelenkfahrzeug nach Anspruch 4, wobei der Lenkkranz (15) direkt auf einem Fahrgestell des Drehgestells (10) angebracht ist und der Lenkkranz geeignet ist, an der Unterseite des Anhängerfahrgestells (12) verriegelt zu werden.

6. Gelenkfahrzeug nach Anspruch 5, wobei ein Tragrahmen (19) an der Oberseite des Lenkkranzes (15) sich nach vorne erstreckt, um eine Fahrerkabine (21) des Fahrzeugs zu tragen.

7. Gelenkfahrzeug nach Anspruch 6, wobei der Tragrahmen (19) lösbar mit dem Lenkkranz (15) und alternativ mit dem Anhänger (12) verbunden ist.

8. Gelenkfahrzeug nach einem der vorhergehenden Ansprüche, wobei das Fahrzeug zwei Drehgestelle mit unterschiedlichen Anzahlen von Achsen aufweist.

9. Gelenkfahrzeug nach einem der vorhergehenden Ansprüche, wobei die Schwenkverbindung, um die das Drehgestell (10) mit dem Anhängerfahrgestell (12) schwenkbar verbunden oder schwenkbar verbindbar ist, fest ist.

10. Gelenkfahrzeug nach einem der Ansprüche 1 bis 8, wobei die Schwenkverbindung, um die das Drehgestell (10) mit dem Anhängerfahrgestell (12) schwenkbar verbunden oder schwenkbar verbindbar ist, relativ zu dem Drehgestell bewegbar ist.

11. Gelenkfahrzeug nach einem der vorhergehenden Ansprüche, wobei das Drehgestell (10) ein ungekoppeltes fünftes Rad (13) an der Position der neutralen Achse (22) umfasst.

## Revendications

1. Véhicule articulé comprenant un train roulant à plusieurs essieux (10) raccordé par pivotement ou pouvant être raccordé par pivotement à un châssis de remorque (12) de sorte que, lorsqu'il est raccordé, le train roulant et le châssis de remorque puissent s'articuler autour d'un axe de pivotement généralement vertical, dans lequel la position dudit raccordement par pivotement est déplacée par rapport à l'axe neutre vertical (22) du train roulant (10) selon un décalage,
dans lequel le raccord par pivotement est une plaque tournante (15) pouvant transmettre des moments de pas et de roulis qui avec le décalage provoquent un moment de pas induit au niveau de la position du raccord par pivotement qui résiste au roulis du véhicule à mesure que le train roulant (10) s'articule par rapport au châssis de remorque (12).

2. Véhicule articulé selon la revendication 1, dans lequel ledit véhicule est un véhicule porteur.

3. Véhicule articulé selon l'une quelconque des revendications précédentes, dans lequel ledit train roulant (10) est situé au niveau de l'extrémité avant du véhicule ou au niveau de l'extrémité arrière du véhicule ou dans lequel un train roulant est situé au niveau de chacune des extrémités avant et arrière du véhicule.

4. Véhicule articulé selon l'une quelconque des revendications précédentes, dans lequel ledit train roulant (10) peut être démonté du châssis de remorque (12).

5. Véhicule articulé selon la revendication 4, dans lequel la plaque tournante (15) est montée directement sur un châssis du train roulant (10) et ladite plaque tournante est adaptée pour être verrouillée à l'arrière du châssis de remorque (12).

6. Véhicule articulé selon la revendication 5, dans lequel un cadre de support (19) au niveau de la surface supérieure de ladite plaque tournante (15) s'étend vers l'avant pour supporter la cabine (21) du conducteur du véhicule.

7. Véhicule articulé selon la revendication 6, dans lequel ledit cadre de support (19) est raccordé de manière amovible à ladite plaque tournante (15) et à ladite remorque (12) alternativement.

8. Véhicule articulé selon l'une quelconque des revendications précédentes, dans lequel ledit véhicule comprend deux dits trains roulants, comprenant des nombres d'essieux différents.

9. Véhicule articulé selon l'une quelconque des revendications précédentes, dans lequel le raccord par pivotement sur lequel le train roulant (10) est raccordé par pivotement ou peut être raccordé par pivotement au châssis de remorque (12) est fixe.

10. Véhicule articulé selon l'une quelconque des revendications 1 à 8, dans lequel le raccord par pivotement sur lequel le train roulant (10) est raccordé par pivotement ou peut être raccordé par pivotement au châssis de remorque (12) peut être déplacé par rapport au train roulant.

11. Véhicule articulé selon l'une quelconque des revendications précédentes, dans lequel le train roulant (10) comprend une cinquième roue non couplée (13) au niveau de la position de l'axe neutre (22).
